# EUROPEAN PATENT SPECIFICATION

(11) **EP 3 421 126 B1**
(45) Date of publication and mention of the grant of the patent: **15.03.2023**
(21) Application number: 18180323.0
(22) Date of filing: 28.06.2018
(51) Int. Cl.: B01J 20/20, B01J 20/28, B01J 20/30, C01B 32/00, C01B 32/342, F17C 11/00

(54) **A METHOD OF PREPARING A GAS-ADSORBING MICRO- AND MESO-POROUS CARBON MATERIAL**
VERFAHREN ZUR HERSTELLUNG EINES GAS-ADSORBIERENDEN MIKRO- UND MESOPORÖSEN KOHLENSTOFFS
PROCÉDÉ DE PRÉPARATION DE CARBONE MICRO- ET MESOPOREUX POUR ADSORPTION DE GAZ

(30) Priority: 30.06.2017 IT 201700073326
(43) Date of publication of application: 02.01.2019
(73) Proprietor: SOL S.p.A., 20900 Monza (MB) (IT)
(72) Inventor: MARCHESE, Leonardo, 10095 Grugliasco (Torino) (IT); ERRAHALI, Mina, 15121 Alessandria (IT); GATTI, Giorgio, 17052 Borghetto Santo Spirito (SV) (IT); TEI, Lorenzo, 10126 Torino (IT); COSSI, Maurizio, 56121 San Lorenzo alle Corti, Cascina (Pisa) (IT)
(74) Representative: Comoglio, Elena

(56) References cited:
- WO-A1-2011/084994
- WO-A1-2017/021843
- US-A1- 2009 317 613
- US-A1- 2014 205 531
- CHONG ZOU ET AL: "Template-free fabrication of hierarchical porous carbon by constructing carbonyl crosslinking bridges between polystyrene chains", JOURNAL OF MATERIALS CHEMISTRY, vol. 20, no. 4, 26 November 2009 (2009-11-26), pages 731-735, XP055460261, GB ISSN: 0959-9428, DOI: 10.1039/B917960G
- BUYI LI ET AL: "A New Strategy to Microporous Polymers: Knitting Rigid Aromatic Building Blocks by External Cross-Linker", MACROMOLECULES, vol. 44, no. 8, 26 April 2011 (2011-04-26) , pages 2410-2414, XP055090882, ISSN: 0024-9297, DOI: 10.1021/ma200630s
- DE SOUZA LUIZ K C ET AL: "Enhancement of CO2adsorption on phenolic resin-based mesoporous carbons by KOH activation", CARBON, ELSEVIER OXFORD, GB, vol. 65, 26 August 2013 (2013-08-26), pages 334-340, XP028726094, ISSN: 0008-6223, DOI: 10.1016/J.CARBON.2013.08.034

## Description

The present invention relates to a method of preparing a high-porosity carbon-based material from the carbonization of polymers containing aromatic groups, which leads to an increase in the surface area and in the total porous volume. In particular, an increase in mesoporous and microporous volume is observed (both supermicropores and ultramicropores). The pores thus obtained are suitable for adsorbing gas, particularly hydrogen, methane and carbon dioxide.

The continuous increase in the energy demand that has occurred in the last decades on a global scale, together with the concerns deriving from climate changes due to greenhouse gas emissions, have led to an intensification of efforts, on the one hand, to promote the development and use of new energy technologies basedon alternative sources, such as natural gas and hydrogen and, on the other, on carbon dioxide capture for climate purposes. There is therefore a strong interest in the development of new porous materials characterized by an adequate surface area and by the presence of micro- and mesopores, useful not only for optimal storage of gases for energy and environmental applications, but also for applications in different sectors such as separation and catalysis.

The use of vegetable and industrial carbon sources for the preparation of activated carbons is well known in the literature. The use of carbon sources from discarded or exhausted products or industrial waste is particularly interesting due to the evident lower environmental impact and the optimization of recycling processes.

Among the most environmentally harmful wastes due to their low degradability and their permanence in the environment are plastics containing aromatic groups such as polystyrenes (PS) and polyethylene terephthalates (PET). The strategy of preparing adsorbing materials derived therefrom thus results in low environmental impact and high added value.

Among the different classes of materials proposed for catalysis, separation and adsorption processes, porous carbons have received great attention in recent decades for their hydrophobic nature, high porosity and surface area, good thermal and mechanical stability and high adsorption capacity [Lu, A-H.; Dai, S. Porous Materials for Carbon Dioxide Capture; Springer: Heidelberg, DE, 2014. Page 22-41]. Porous carbons are generally synthesized by the carbonization of carbon-based precursors, using mainly two methods: i) physical activation, which involves the pyrolysis of the precursor at high temperatures in the presence of gases such as carbon dioxide, vapor, or others; or ii) chemical activation, wherein the precursor is carbonized at lower temperatures in the presence of an activating agent such as an alkaline hydroxide or transition metal oxides [Z. Hu, M. P. Srinivasan, Y. Ni, Adv. Mater.2000, 12, 62. b) Y. Zou, B.-X. Han, Energy Fuels 2001, 15, 1383. c) A. Ahmadpour, D. D. Do, Carbon 1996, 34, 471.] This latter strategy leads to materials with higher surface area and porous volume characteristics and therefore to an higher performance for the applications derived from these properties.

Over the years, porous carbons have been developed from two main classes of precursors: i) traditional carbons derived from biomass; and (ii) carbons derived from synthetic polymers. The latter class of carbons has the advantage of being able to better control the chemical composition of the carbons produced, but above all the morphology and the distribution of the pores [Lu, A-H.; Dai, S. Porous Materials for Carbon Dioxide Capture; Springer:Heidelberg, DE, 2014. page 22-41]. In particular, porous carbons replicated by porous materials (hard template porous carbons) such as PAFs (Porous Aromatic Frameworks) [Li, Y.; Ben, T.; Zhang, B.; Fu, Y.; Qiu, S. Scientific Reports, 2013, 3, 2420] and HCPs (Hyper Cross-linked Polymers) (see international patent application WO2017/021843) are systems wherein the porous material acts as a nanoscale mold so that the porous lattice of the initial material is maintained in the final carbon.

Porous carbons obtained from plastics containing aromatic groups are described in the prior art (A. Bazargan, C. Wai Hui, G. McKay,Adv Polym Sci, DOI: 10.1007/12_2013_253) For example, porous carbons obtained from PET have been described in Fernandez-Morales I., Almazan-Almazan MC, Perez-Mendoza M.J., Domingo-Garcia M., Lopez-Garzon F.J. Micropor. Mesopor. Mater. 2005, 80, 107-115 and in Parra J.B., Ania C.O., Arenillas A., Rubiera F., P1S J.J. Appl Surf Sci 2004, 238, 304-308. In this last article, Parra et al. reported porous carbons obtained by physical activation at temperatures above 900°C of PET polymers derived from the recycling of plastic bottles. The highest performing carbon (PC76) has a surface area of less than 2500 m²g⁻¹ and a porous volume of 0.9 cm³g⁻¹. In addition, Aleksienko et al (Aleksienko N.N., Pastukhov A.V., Davankov V.A., Belyakova L.D., Voloshchuk A.M. Russ, J. Phys. Chem. 2004, 78, 1992-1998) show the preparation of carbons with a process of physical activation in N₂ of spheres of commercial-grade, hyper-crosslinked macroporous polystyrene with divinylbenzene with cationic and sulfocationic functionalities. The maximum surface area obtained is about 1500 m²g⁻¹ and the total porous volumes do not exceed 0.64 cm³g⁻¹.

Chong Zou et al. in Journal of Materials Chemistry, 20(4), 731-735 describe the preparation of hierarchical porous carbon from polystyrene modified with CCl₄ in presence of AlCl₃ as Friedel-Crafts catalyst.

WO 2017/021843 discloses microporous carbon materials obtained from the carbonization of polymers containing aromatic structures of Formula (II). The obtained microporous carbon materials are employed for storing hydrogen, methane and carbon dioxide. According to the IUPAC classification, the term "micropore" is meant to indicate pores having a pore size smaller than 20 Å. In turn, micropores are divided into two groups, namely ultramicropores (less than 7 Å) and supermicropores (from 7 to 20 Å).

The present invention describes the preparation of micro- and mesoporous adsorbing materials, in particular micro- and mesoporous carbons, obtained by carbonization from polymers containing previously hyper-crosslinked aromatic groups, herein referred to as PoliKUPO (carbon obtained from a porous polymer derived from polymers containing aromatic groups). The polymers used as starting materials in the method of the present invention are preferably polymers containing aromatic groups derived from plastics at the end of their life cycle, for example polystyrenes and polyethylene terephthalates. The hyper-crosslinking step consists in the reaction between the polymer containing aromatic groups and the crosslinking agent formaldehyde dimethyl acetal (FDA), in the presence of gallic chloride (GaCl₃) or other chloride as catalyst. The subsequent carbonization step of the hyper-crosslinked polymers is described for example in the international patent application WO2017/021843 with reference to the different hyper-crosslinked polymers designated as C-UPO.

Unlike UPO polymers (Errahali, M; Gatti, G; Tei, L; Paul, G; Rolla, G; Canti, L; Fraccarollo, A; Cossi, M; Comotti, A; Sozzani, P;Marchese, L. Microporous Hypercrosslinked Aromatic Polymers Designed for Methane and Carbon Dioxide Adsorption,J. Phys. Chem. C, 2014, 118, 28699-28710), the materials obtained by the hyper-crosslinking of polymers containing aromatic groups, used as precursors of the preparation of PoliKUPOs according to the present invention, show a strong reduction in the quantity of supermicropores and a similar quantity of mesopores. Unexpectedly, the carbonization process to obtain the PoliKUPOs leads to total porosity values similar to those obtained after carbonization of the UPO polymers to obtain C-UPOs (see international patent application WO2017/021843). In particular, in the PoliKUPOs a small quantity of ultramicropores (0.12 cm³g⁻¹), 0.58 cm³g⁻¹ supermicropores and 0.78 cm³g⁻¹ mesopores is observed. It is known that the presence of both micro- and mesopore families makes the porous material particularly suitable for adsorbing and storing gases such as carbon dioxide, hydrogen and methane both at low and high pressures.

A further advantage of the gas adsorbing carbons obtained according to the present invention relates to the environmental, economic and industrial aspect. In effect, the process of preparing the carbon from discarded materials is not only particularly economical and easily scalable; it is also of high added value from the environmental point of view.

These and other advantages are achieved with the method according to the independent claim 1 and the micro- and mesoporous carbon according to the independent claim 12. The dependent claims define further characteristics of the invention and form an integral part of the description.

The gas-adsorbing micro- and mesoporous carbon obtainable with the method of the invention are particularly suitable for storing a gas, in particular hydrogen, methane and/or carbon dioxide, as they exhibit high surface area and total pore volume

As it will be shown in greater detail below, the gas-adsorbing micro- and mesoporous carbon obtainable by the method of the invention contains a considerable quantity of micropores and mesopores which, due to their size, are particularly suitable for adsorbing and storing carbon dioxide, hydrogen and methane gases, both at low and high pressures. Moreover, such carbon can be obtained by a method of hyper-crosslinking polymers containing aromatic groups, preferably from recycled polymers, by means of a homogeneous phase method and with the extensive use of solvents and catalysts, which is therefore neither excessively expensive nor particularly difficult to scale. The advantageous and unexpected properties of the micro- and mesoporous carbon obtainable with the method of the present invention are demonstrated in particular in the experimental section of the present description.

Additional objects, features and advantages will become apparent from the detailed description that follows.

The preparation method of the invention comprises a first step of synthesizing a hyper-crosslinked porous polymer, wherein a Friedel-Crafts reaction is carried out using as starting material a polymer containing aromatic groups (preferably from recycled polymers) having a general formula chosen from the group consisting of the formulae (I), (II), (III) and (IV) as defined hereinafter, a Friedel-Crafts catalyst and formaldehyde dimethyl acetal (FDA) as crosslinking agent.

After the synthesis step, the hyper-crosslinked porous polymer obtained is impregnated with a preferably basic activating agent solution and is subjected to a carbonization heat treatment at a temperature within the range of 500 to 950°C.

The present inventors have observed that in the presence of an activating agent, preferably employed at a weight ratio with respect to the hyper-crosslinked polymer between 0.5:1 and 8:1, the carbonization heat treatment at 500-950°C causes a considerable increase in micro- and mesopores, together with an evident increase in the surface area (see Table 1 below).

The micro- and mesoporous carbon obtained by the method of the invention is prepared from polymers containing aromatic groups, preferably from recycled polymers, having a general formula selected from the group consisting of the formulae (I), (II), (III) or (IV) illustrated below: 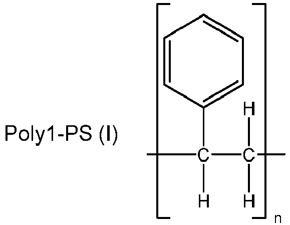 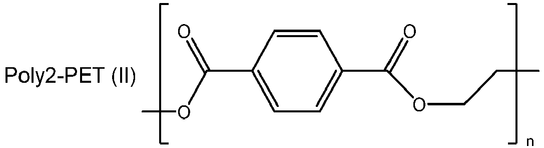 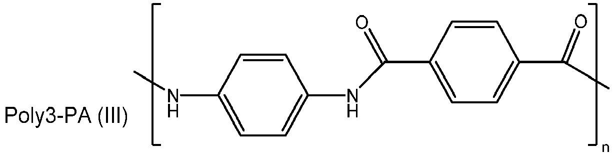 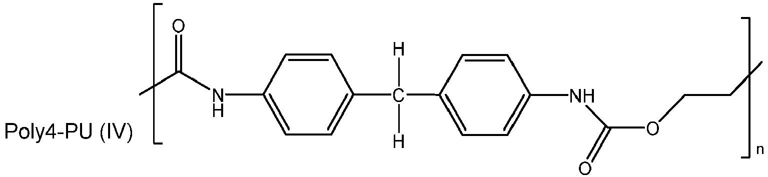 wherein n is an integer preferably comprised within the range of 200 to 6,000. Comonomeric units or additives may also be present.

A polymer containing aromatic groups preferred for use in the method of the invention is polystyrene (I).

Examples of Friedel-Crafts catalysts suitable for use in the method of the invention are BF₃, BeCl₂, GaCl₃, TiCl₄, SbCl₅, SnCl₄, FeCl₃, AlCl₃, Sc(OTf)₃, Mo(CO)₆, SeCl₄, TeCl₄, sulfuric acid, hydrofluoric acid and super acids, such as for example HF SbF or HSO₃F SbFs. The most preferred catalysts are GaCl₃ and FeCl₃.

Aprotic organic solvents suitable for use in the synthesis step of the method of the invention include both polar solvents and apolar solvents. Specific examples of solvents, provided purely by way of illustration, are dichloroethane, tetrachloroethane, dimethylsulfoxide, dimethylformamide, chloroform, toluene, nitromethane (CH₃NO₂), ethylene glycol, trifluoroacetic acid, carbon disulfide and chlorobenzene. Such solvents may also be used in a mixture to increase the solubility of the polymers. The most preferred solvent is dichloroethane.

According to a preferred embodiment of the method of the invention, the concentration of the polymer containing aromatic groups of formula (I), (II), (III) or (IV) in the organic aprotic solvent is in the range of 1g to 1300 g per liter of solvent.

According to a preferred embodiment of the method of the invention, the molar ratio of the structural unit of the polymer of formula (I) and the crosslinking agent FDA is in the range of 1:0.01 to 1:40.

The chemical structure of the hyper-crosslinked porous polymer obtained after the synthesis step of the method of the invention consists in the crosslinking of the aromatic rings of the polymers of formula (I), (II), (III) or (IV) by means of methylene bridges (from one to three methylene bridges per aromatic ring).

The carbonization step, which allows the final porous carbon to be obtained, provides for the impregnation of the hyper-crosslinked polymer of formula (I), (II), (III) or (IV) with an activating agent solution in a solvent. The activating agent: hyper-crosslinked polymer weight ratio is preferably comprised between 0.5:1 and 8:1 and more preferably between 3:1 and 4:1. Preferably, the reaction mixture is kept under agitation for a time between 1 minute and 18 hours.

According to a preferred embodiment of the method of the invention, the carbonization heat treatment is carried out at a temperature in the range of 500 to 950°C, preferably at a temperature in the range of 700 to 900°C and even more preferably at a temperature in the range of 750 to 800°C.

According to a preferred embodiment of the method of the invention, the activating agent used in the carbonization step is selected from potassium hydroxide (KOH), sodium hydroxide (NaOH), potassium carbonate (K₂CO₃), sodium carbonate (Na₂CO₃), zinc chloride (ZnCh) and phosphoric acid (H₃PO₄). A particularly preferred activating agent is potassium hydroxide (KOH).

Examples of suitable solvents for mixing the activating agent and for being used in the carbonization step are water, ethanol, methanol, acetonitrile, tetrahydrofuran and dimethylformamide or mixtures of the same solvents with water up to 50% v/v. The most preferred solvents are water and ethanol, or a mixture thereof up to 50% v/v.

According to a preferred embodiment of the method of the invention, the concentration of the activating agent in the solvent, expressed as molarity (mol L⁻¹), is in the range of 0.01 M to 22 M.

According to another preferred embodiment, the mixture is dried by distillation in a rotary evaporator at a temperature between 25°C and 160°C, or by an inert gas flow (nitrogen or argon), for a time comprised between 0 min and 18 hours.

According to yet another preferred embodiment, the carbonization treatment is conducted under an inert gas flow, wherein the gas is preferably selected from N₂ and Ar.

According to yet another preferred embodiment, once the carbonization temperature is reached, it remains in isothermal conditions for a time ranging from about 10 minutes to about 5 hours. The preferred time is about 60 minutes.

According to yet another preferred embodiment, the heating ramp is between 0.1°C min⁻¹ and 50°C min⁻¹.

According to yet another preferred embodiment, the carbonaceous product is finally washed with water and hydrochloric acid (HCl) with a concentration ranging from 0.5M to 5M and again with water until reaching a neutral pH.

A detailed description of the structural features and porosity of the porous carbon obtained with the method of the present invention, made with reference to its preferred embodiments, is provided in the following examples, referring to the accompanying drawings, wherein:
figure 1 shows the adsorption-desorption isotherms of N₂ at 77K (A) and the distribution of the pores (B) for the polymer PoliUPO (stars) and the carbon PoliKUPO (circles);
figure 2 shows the CO₂ storage at 298K for the polymer PoliUPO (stars) and for the carbon PoliKUPO (circles);
figure 3 shows the storage of CH₄ at 298K for the polymer PoliUPO (stars) and for the carbon PoliKUPO (circles).

The following examples are provided for illustrative purposes only and are not intended to limit the scope of the invention as defined in the appended claims.

### EXAMPLES

### Synthesis of the hyper-crosslinked polymer and subsequent carbonization

20g of packaging polystyrene and 93.14 g of ferric chloride were suspended in 540 ml of DCE. The mixture was mechanically stirred at room temperature to obtain a homogeneous solution, then 54 ml of FDA were added gradually. The mixture was kept under agitation for about 30 min and then heated to 80°C for about 18 hours. After cooling to room temperature, the dense gel was diluted with ethanol and washed several times with ethanol and water until the pH became neutral, and finally dried in an oven at 110°C for one night (the material is called **PoliUPO**).

2 g of PoliUPO material are added to 6 g of KOH under an inert atmosphere. Subsequently, the mixture is placed in an alumina crucible, which is placed inside an alumina tube. The carbonization is carried out under a nitrogen flow with a temperature ramp of 2°C min⁻¹ until reaching a temperature of 800°C and kept under isothermal conditions at 800°C for 60 min. After carbonization, the obtained material is washed with deionized water, HCl 2M and with successive washing cycles of deionized water until reaching neutral pH. The resulting material is dried in an oven at 110°C for 18 hours (sample called **PoliKUPO**).

### Porosity analysis

The textural analysis concerning both the specific surface area and the distribution of the pore size in the samples was obtained by physisorption of N₂. The measurement is carried out at low temperatures (77K), and at increasing pressure values between 10⁻⁴ and 1 bar.

Before carrying out the measurements, the samples were pre-treated at 150°C for 18 hours in high vacuum. For comparison, the pore distributions of the materials before carbonization have also been reported. The BET surface areas were calculated in the pressure range P/P₀ = 0.05-0.15, and the pore size distributions were calculated using the "Quenched Solid Density Functional Theory" (QSDFT) method on carbon surfaces with slit/cylindrical geometry applied to the adsorption branch.

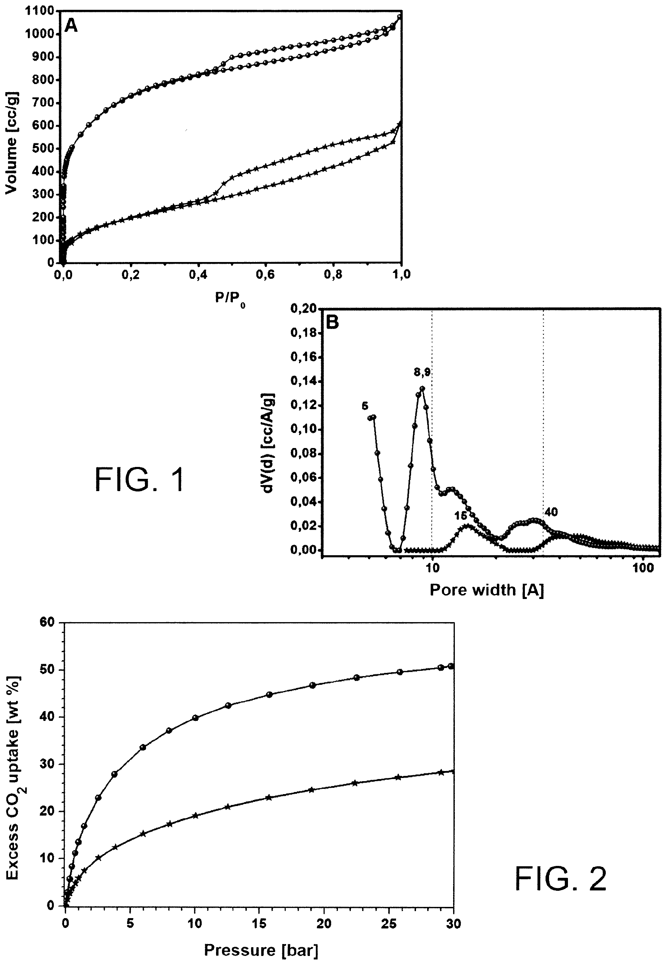

The adsorption-desorption isotherms of N₂ at 77K (box A) and the distributions of the pores (box B) for the crosslinked polymer (blue stars) and the PoliKUPO carbon obtained (red circles), are shown in figure 1.

The adsorption isotherm of the PoliKUPO material, obtained after the carbonization process, shows a marked increase in the amount of adsorbed gas, particularly at low pressures (500 cm³g⁻¹). The adsorption isotherm profile shows a pseudo-Langmuir adsorption isotherm with a predominance of micropores, while in desorption, the presence of the hysteresis loop also demonstrates the presence of mesopores.

The surface area after carbonization is increased, as well as the total porous volume, as shown in table 1.

**Table 1. Properties of surface area and porous volume of the raw material (PoliUPO) and after carbonization (PoliKUPO); a) the surface area is calculated from the nitrogen adsorption isotherm at 77K using the BET method; b) total porous volume at pressure P/P₀ = 0.995; c) the microporous volume is determined using the "Quenched Solid Density Functional Theory" (QSDFT) model on a carbon surface with a slit/cylindrical geometry applied to the adsorption branch.**

| **Sample** | **SSA _{BET} [m²/g]** | **V _{TOTAL} [cc/g]** | **V _{MICRO} [cc/g]** | | | **V _{Meso} [cc/g]** |
|---|---|---|---|---|---|---|
| | | | **<7Å** | **7<Å<20** | **Total** | |
| PoliUPO | 739 | 0.78 | -- | 0.11 | 0.11 | 0.67 |
| PoliKUPO | 2637 | 1.48 | 0.12 | 0.58 | 0.70 | 0.78 |

The pore distribution obtained after carbonization is characterized by the appearance of ultramicropores of dimensions equal to 5Å. The carbonization also led to a decrease of a part of the micropores from 15 Å to 9 Å and to mesopores of a smaller size between 30 and 40 Å.

The porous volume following carbonization increases from 0.78 cc/g to 1.48 cc/g of which 0.70 cc/g of micropores and 0.78 cc/g of mesopores.

### CO₂ and CH₄ storage measurements

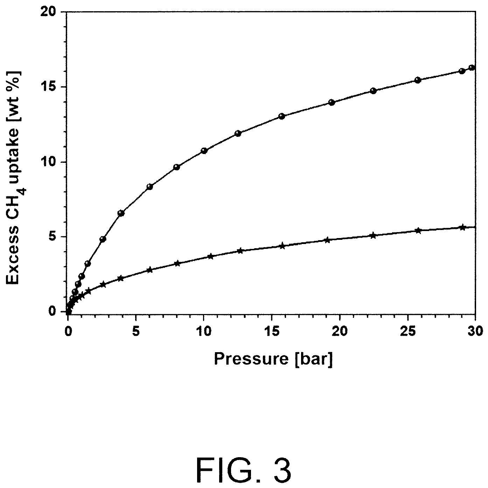

Figures 2 and 3 show the excess storage data of CO₂ and CH₄ at room temperature and at pressures up to 30 bar of the polymer PoliUPO and PoliKUPO, respectively.

As it is evident from the carbon dioxide and methane storage curves, the carbonized material has improved gas storage capacity at both high and low pressures. In particular, PoliKUPO carbon may store up to 50.8 wt% of CO₂ and 16.4 wt% of methane.

In conclusion, these results show that the polymer carbonization process deriving from the hyper-crosslinking of the polystyrene leads to a porous carbon with surface area BET and increased total porous and microporous and mesoporous volume. The increase in surface area and microporous volume and especially the presence of ultramicropores and supermicropores and mesopores make this porous carbon very suitable for the storage of gases such as methane, hydrogen and carbon dioxide, both at high and low pressures, with high efficiency at intermediate pressures.

## Claims

1. A method of preparing a micro- and mesoporous carbon, comprising the steps of:
(a) reacting a starting polymer selected from formulae (I), (II), (III) or (IV): 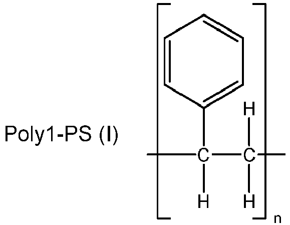 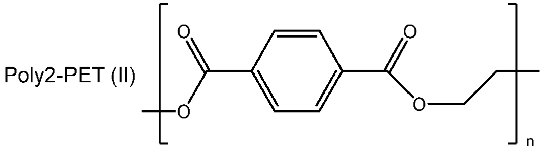 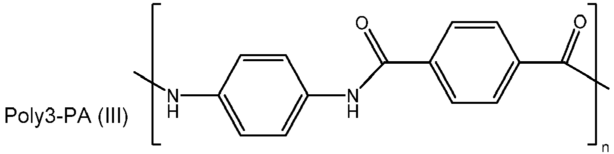 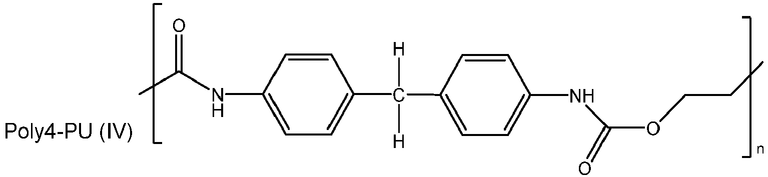 wherein n is an integer comprised within the range of from about 200 to about 6,000, with a Friedel-Crafts catalyst in an aprotic organic solvent and with formaldehyde dimethyl acetal (FDA) as a crosslinking agent, thereby obtaining a porous polymer hyper-crosslinked through methylene bridges between the aromatic rings of the polymer of formula (I), (II), (III) or (IV), wherein the number of methylene bridges for each aromatic ring ranges from one to three;
b) subjecting the hyper-crosslinked porous polymer obtained in step (a) to a carbonization heat treatment at a temperature comprised within the range of 500 to 950°C, in the presence of an activating agent in a solvent, wherein the weight ratio between the activating agent and the hyper-crosslinked porous polymer is comprised between 0.5:1 and 8:1.

2. The method according to claim 1, wherein the starting polymer is polystyrene (formula (I)).

3. The method according to claim 1 or 2, wherein the aprotic organic solvent is selected from the group consisting of dichloroethane, tetrachloroethane, dimethylsulfoxide, dimethylformamide, chloroform, toluene, nitromethane (CH₃NO₂), ethylene glycol, trifluoroacetic acid, carbon disulfide, chlorobenzene and mixtures thereof.

4. The method according to any one of claims 1 to 3, wherein the Friedel-Crafts catalyst is selected from the group consisting of BF₃, BeClz, GaCl₃, TiCl₄, SbCl₅, SnCl₄, FeCl₃, AlCl₃, Sc(OTf)₃, Mo(CO)₆, SeCl₄, TeCl₄, sulfuric acid, hydrofluoric acid and super acids.

5. The method according to any one of claims 1 to 4, wherein the molar ratio between the structural unit of the starting polymer selected from formulae (I), (II), (III) and (IV) and the FDA crosslinking agent is comprised within the range of from 1:0.01 to 1:40.

6. The method according to any one of claims 1 to 5, wherein the temperature of the carbonization step is comprised between 700 and 900°C, preferably between 750 and 800°C.

7. The method according to any one of claims 1 to 6, wherein the activating agent of step b) is selected from the group consisting of potassium hydroxide (KOH), sodium hydroxide (NaOH), potassium carbonate (K₂CO₃), sodium carbonate (Na₂CO₃), zinc chloride (ZnCh), and phosphoric acid (H₃PO₄).

8. The method according to any one of claims 1 to 7, wherein the weight ratio between the activating agent and the hyper-crosslinked porous polymer obtained in step (a) of claim 1 is comprised between 3:1 and 4:1.

9. The method according to any one of claims 1 to 8, wherein the solvent of the activating agent is selected from the group consisting of water, ethanol, methanol, acetonitrile, tetrahydrofuran, dimethylformamide and mixtures thereof.

10. The method according to any one of claims 1 to 9, wherein the concentration of the activating agent in the solvent of the carbonization step is comprised within the range of from 0.01M to 22M.

11. The method according to any one of claims 1 to 10, wherein the carbonization heat treatment is carried out for a time comprised between 10 minutes and 5 hours, under an inert gas flow.

## Patentansprüche

1. Verfahren zur Herstellung von mikro- und mesoporösem Kohlenstoff, enthaltend folgende Schritte:
(a) Reagieren eines Startpolymers ausgewählt aus Formeln (I), (II), (III) oder (IV): 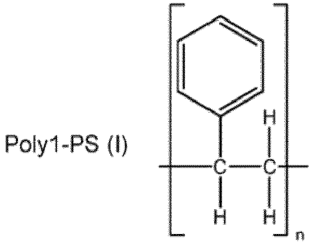 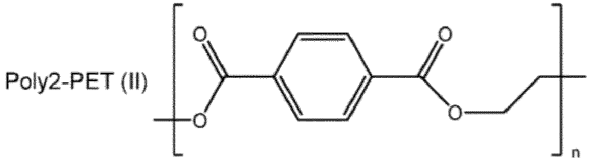 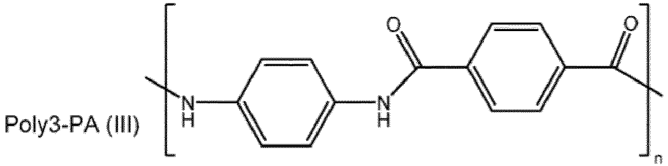 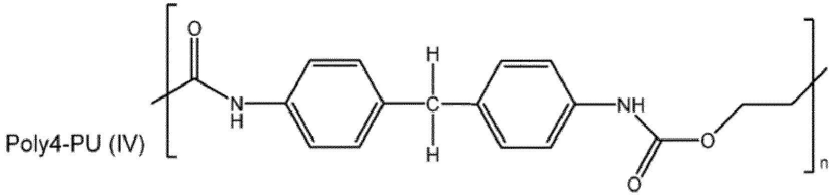 wobei n eine ganze Zahl enthalten in der Spanne von etwa 200 bis etwa 6000 ist, mit einem Friedel-Crafts-Katalysator in einem aprotischen organischen Lösemittel und mit Formaldehyddimethylacetal (FDA) als Quervernetzungsmittel, wodurch man ein poröses Polymer erhält, das durch Methylenbrücken zwischen den aromatischen Ringen des Polymers nach Formeln (I), (II), (III) oder (IV) hyperquervernetzt ist, wobei die Zahl der Methlyenbrücken für jeden aromatischen Ring von 1 bis 3 rangiert;
(b) einer Verkohlungshitzebehandlung Aussetzen des hyperquervernetzen Polymers, das in Schritt (a) hergestellt wurde, bei einer Temperatur, die in der Spanne von 500 °C bis 950 °C enthalten ist, in der Gegenwart eines Aktivierungsmittels in einem Lösemittel, wobei der Gewichtsquotient zwischen dem Aktivierungsmittel und dem hyperquervernetzen porösen Polymer zwischen 0,5:1 und 8:1 enthalten ist.

2. Verfahren nach Anspruch 1, wobei das Startpolymer Polystyrol (Formel (I)) ist.

3. Verfahren nach Anspruch 1 oder 2, wobei das aprotische organische Lösemittel ausgewählt ist aus der Gruppe bestehend aus Dichlorethan, Tetrachlorethan, Dimethylsulfoxid, Dimethylformamid, Chloroform, Toluol, Nitromethan (CH₃NO₂), Ethylenglycol, Trifluoressigsäure, Kohlenstoffdisulfid, Chlorbenzol und Mischungen davon.

4. Verfahren nach einem der Ansprüche 1 bis 3, wobei der Friedel-Crafts-Katalysator ausgewählt ist aus der Gruppe bestehend aus BF₃, BeClz, GaCl₃, TiCl₄, SbCl₅, SnCl₄, FeCl₃, AlCl₃, Sc(OTf)₃, Mo(CO)₆, SeCl₄, TeCl₄, Schwefelsäure, Flusssäure und Supersäuren.

5. Verfahren nach einem der Ansprüche 1 bis 4, wobei der molare Quotient zwischen der strukturellen Einheit des Startpolymers ausgewählt aus Formeln (I), (II), (III) und (IV) und dem FDA Quervernetzungsmittel in der Spanne von 1:0,01 bis 1:40 enthalten ist.

6. Verfahren nach einem der Ansprüche 1 bis 5, wobei die Temperatur des Verkohlungsschritts zwischen 700 und 900 °C enthalten ist, vorzugsweise zwischen 750 und 800 °C.

7. Verfahren nach einem der Ansprüche 1 bis 6, wobei das Aktivierungsmittel aus Schritt (b) ausgewählt ist aus der Gruppe bestehend aus Kaliumhydroxid (KOH), Natriumhydroxid (NaOH), Kaliumcarbonat (K₂CO₃), Natriumcarbonat (Na₂CO₃), Zinkchlorid (ZnCh) und Phosphorsäure (H₃PO₄).

8. Verfahren nach einem der Ansprüche 1 bis 7, wobei der Gewichtsquotient zwischen dem Aktivierungsmittel und dem hyperquervernetzen porösen Polymer, das in Schritt (a) hergestellt wird, zwischen 3:1 und 4:1 enthalten ist.

9. Verfahren nach einem der Ansprüche 1 bis 8, wobei das Lösemittel des Aktivierungsmittels ausgewählt ist aus der Gruppe bestehend aus Wasser, Ethanol, Methanol, Acetonitril, Tetrahydrofuran, Dimethylformamid und Mischungen davon.

10. Verfahren nach einem der Ansprüche 1 bis 9, wobei die Konzentration des Aktivierungsmittels im Lösemittel des Verkohlungsschritts in der Spanne von 0,01 M bis 22 M enthalten ist.

11. Verfahren nach einem der Ansprüche 1 bis 10, wobei die Verkohlungshitzebehandlung für eine Zeit enthalten zwischen 10 Minuten und 5 Stunden unter einem inerten Gasstrom durchgeführt wird.

## Revendications

1. Procédé de préparation d'un carbone micro- et méso-poreux, comprenant les étapes consistant à :
(a) faire réagir un polymère de départ sélectionné parmi les formules (I), (II), (III) ou (IV) : 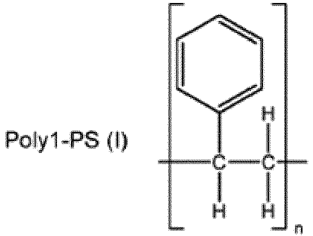 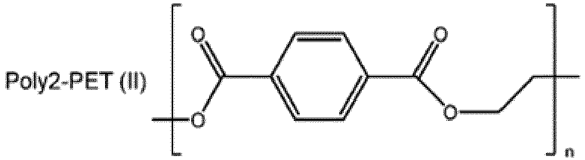 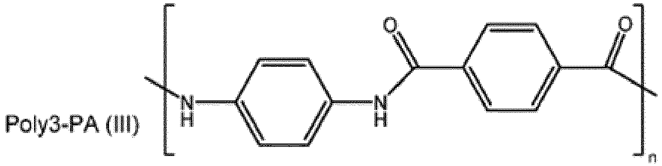 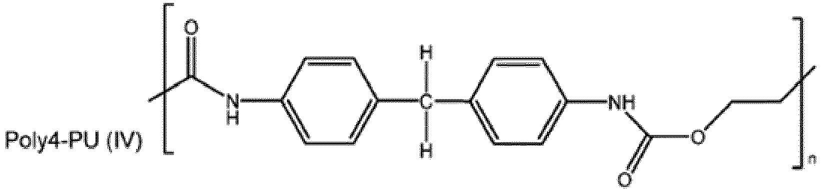 dans lesquelles n est un nombre entier compris dans la plage allant d'environ 200 à environ 6 000,
avec un catalyseur de Friedel-Crafts dans un solvant organique aprotique et avec du formaldéhyde diméthylacétal (FDA) comme agent de réticulation, pour ainsi obtenir un polymère poreux hyper-réticulé par des ponts méthylène entre les cycles aromatiques du polymère de formule (I), (II), (III) ou (IV), dans lequel le nombre de ponts méthylène pour chaque cycle aromatique est de un et trois ;
b) soumettre le polymère poreux hyper-réticulé obtenu à l'étape (a) à un traitement thermique de carbonisation à une température comprise dans la plage allant de 500 à 950 °C, en présence d'un agent d'activation dans un solvant, dans lequel le rapport en poids entre l'agent d'activation et le polymère poreux hyper-réticulé est compris entre 0,5 : 1 et 8 : 1

2. Procédé selon la revendication 1, dans lequel le polymère de départ est un polystyrène (formule (I)).

3. Procédé selon la revendication 1 ou 2, dans lequel le solvant organique aprotique est sélectionné dans le groupe constitué par le dichloroéthane, le tétrachloroéthane, le diméthylsulfoxyde, le diméthylformamide, le chloroforme, le toluène, le nitrométhane (CH₃NO₂), l'éthylène glycol, l'acide trifluoroacétique, le disulfure de carbone, le chlorobenzène et les mélanges de ceux-ci.

4. Procédé selon l'une quelconque des revendications 1 à 3, dans lequel le catalyseur de Friedel-Crafts est sélectionné dans le groupe constitué de BF₃, BeCl₂, GaCl₃, TiCl₄, SbCl₅, SnCl₄, FeCl₃, AlCl₃, Sc(OTf)₃, Mo(CO)₆, SeCl₄, TeCl₄, l'acide sulfurique, l'acide fluorhydrique et les superacides.

5. Procédé selon l'une quelconque des revendications 1 à 4, dans lequel le rapport molaire entre le motif structural du polymère de départ sélectionné parmi les formules (I), (II), (III) et (IV) et l'agent de réticulation FDA est compris dans la plage allant de 1 : 0,01 à 1 : 40.

6. Procédé selon l'une quelconque des revendications 1 à 5, dans lequel la température de l'étape de carbonisation est comprise entre 700 et 900 °C, de préférence entre 750 et 800 °C.

7. Procédé selon l'une quelconque des revendications 1 à 6, dans lequel l'agent d'activation de l'étape b) est sélectionné dans le groupe constitué par l'hydroxyde de potassium (KOH), l'hydroxyde de sodium (NaOH), le carbonate de potassium (K₂CO₃), le carbonate de sodium (Na₂CO₃), le chlorure de zinc (ZnCl₂), et l'acide phosphorique (H₃PO₄).

8. Procédé selon l'une quelconque des revendications 1 à 7, dans lequel le rapport en poids entre l'agent d'activation et le polymère poreux hyper-réticulé obtenu à l'étape (a) de la revendication 1 est compris entre 3 : 1 et 4 : 1.

9. Procédé selon l'une quelconque des revendications 1 à 8, dans lequel le solvant de l'agent d'activation est sélectionné dans le groupe constitué par l'eau, l'éthanol, le méthanol, l'acétonitrile, le tétrahydrofurane, le diméthylformamide et les mélanges de ceux-ci.

10. Procédé selon l'une quelconque des revendications 1 à 9, dans lequel la concentration de l'agent d'activation dans le solvant de l'étape de carbonisation est comprise dans la plage allant de 0,01 M à 22 M.

11. Procédé selon l'une quelconque des revendications 1 à 10, dans lequel le traitement thermique de carbonisation est réalisé pendant une durée comprise entre 10 minutes et 5 heures, sous flux de gaz inerte.
